# EUROPEAN PATENT SPECIFICATION

(11) **EP 2 004 733 B1**
(45) Date of publication and mention of the grant of the patent: **14.07.2010**
(21) Application number: 07734107.1
(22) Date of filing: 26.03.2007
(51) Int. Cl.: C08J 5/00

(54) **SILK FIBRE COMPOSITES**
SEIDENFASERVERBUNDWERKSTOFFE
FIBRES DE SOIE COMPOSITES

(30) Priority: 24.03.2006 GB 0605929
(43) Date of publication of application: 24.12.2008
(73) Proprietor: K.U. Leuven Research and Development, 3000 Leuven (BE); HERMES SELLIER, 75008 Paris (FR)
(72) Inventor: VERPOEST, Ignace, B-3010 Kessel-Lo (BE); VAN VUURE, Aart Willem, NL-6668 RANDWIJK (NL); EL ASMAR, Nedda, BE-21OO ANTWERPEN (BE); VANDERBEKE, Jan, B-8520 KUURNE (BE)
(74) Representative: Ulmann, Catherine Claire
(86) International application number: PCT/IB2007/000781
(87) International publication number: WO 2007/110758

(56) References cited:
- JP-A- 1 229 624
- JP-A- 54 047 723
- JP-A- 58 222 161
- JP-A- 2004 142 261
- US-A1- 2002 048 644

## Description

### FIELD OF THE INVENTION

The present invention relates to fibrous composite material comprising a thermoplastic polymer as matrix phase and silk fibres as reinforcement phase wherein the silk fibres are organised within said composite in at least two directions. More particularly the silk fibrous composite material of the present invention has a high penetration resistance. The invention further relates to panels or shells comprising fibrous composite material according to the invention as well as objects comprising such panels or shells.

### BACKGROUND OF THE INVENTION

Natural fibre composites have recently attracted a considerable amount of attention in the composite materials research community as well as in industry. This is due to a range of potential advantages of natural fibres, especially with regard to their environmental performance. Natural fibres are renewable resources and even when their composite waste is incinerated, they don't cause net emission of carbon dioxide to the environment (i.e. these materials are CO₂ neutral). There is some effective amount of CO₂ emitted during their processing (due to energy consumption), but this quantity is much lower than the effective amount emitted during manufacture of synthetic fibres like glass and carbon fibre. Natural fibres are inherently biodegradable, which may be beneficial. Due to their relatively low density, high specific mechanical properties comparable to those of glass fibres are obtained for some fibres like flax, hemp and kenaf. Other advantages are potential low cost and relatively low investment needed when cultivating natural fibres. Furthermore, these fibres are typically less abrasive than glass or carbon, e.g. leading to lower wear in textile processing and to potentially lower occupational health risks due to fibre dust. Also, the general public typically appreciates the use of natural materials.

The present invention relates to silk fibre composites. Silk fibres share many of the advantages as listed above for natural fibres. Silk fibres have an exceptionally high strain to failure and the present invention shows how this property can be translated into very tough composite materials.

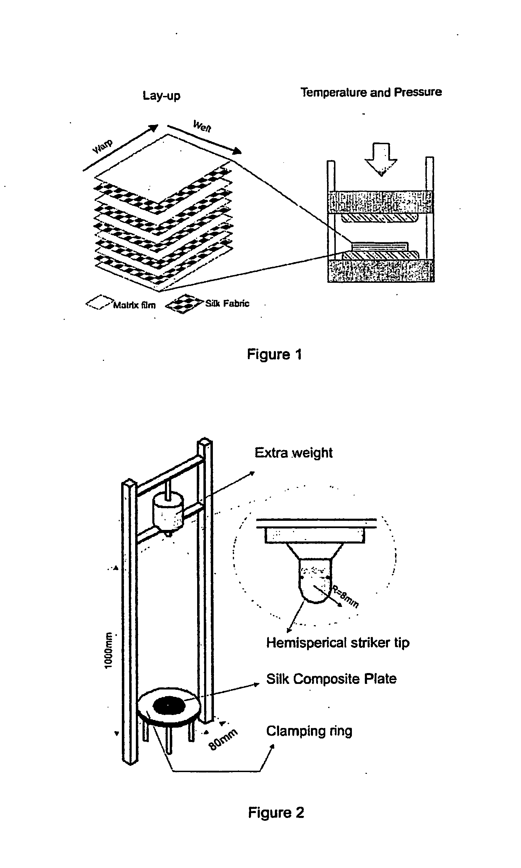

JP3653635 describes a reinforced composite material comprising a thermoplastic polymer, more particularly polybutylene succinate, polypropylene or polylactate, as matrix phase and silk weaves as reinforcement phase. Said silk weaves were either twill or plain weaves wherein the 8bre density in the weft and warp directions differed more than 12% i.e. fabrics unbalanced in weight and consequently in strength. The use of such unbalanced weaves typically results in composites having a different strength in the respective fibre directions of the composite. The present invention show that the impact resistance (as measured by the method outlined in example 2 and figure 2) of such composites is relatively low and that a markedly higher impact resistance is obtained in silk fibre reinforced composites with a thermoplastic polymer matrix wherein the silk fibres are arranged in at least two fibre directions such that the strength of the composite in each of the fibre directions is similar, i.e. a composite balanced in strength in the fibre directions. Moreover, impact resistance can be further improved by using a low twist of the silk fibre yarns (twist reduces fibre strength). Hence, the silk fibre reinforced composite materials of the present invention have the advantage that they are relatively light, whilst having a high impact resistance. In addition the present invention provides silk reinforced composites comprising selected thermoplastic polymers with a high strain to failure as matrix phase, which have a high impact resistance independent of the fibre organisation. Due to their characteristics these composite materials of the present invention are particularly useful for the manufacture of panels or shells to be integrated into objects, which in the course of their life cycle are subject to shocks or at risk of penetration. Examples of such objects are recipients or containers, which are frequently transported or which are used in the proximity of pointed items, such as boxes, suitcases, briefcases, handbags, botttes, bath or kitchen accessories or watchcases.

The importance of impact resistance and of other properties of materials used in load bearing products such as suitcases, briefcases, handbags and the like are discussed in detail in GB2238753.

A reinforced composite material comprising a thermoplastic polymer and silk weaves , wherein the composite material consists of a laminated body in which a layer of thermoplastic resin and a layer of silk woven fabric are alternately laminated is disclosed in JP 2004 142261. Said silk weaves are twill or plain weaves wherein the fibre density in the weft and warp directions differ more than 16%, i.e. fabrics unbalanced in weight.

### SUMMARY OF THE INVENTION

The present invention is based on the finding that selected silk fibre reinforced composite materials comprising a thermoplastic polymer matrix are relatively light, whilst having a high Impact resistance. The silk fibre reinforced composite materials of the present invention allow for an optimal dissipation of the impact energy such that they have a penetration resistance as measured according to the test method described in example 2, which is higher than 20 J per mm of plate thickness, more preferably more than 30 J per mm, most preferably more than 40 J per mm. Due to the high impact resistance of the fibrous composite material according to the present invention, panels or shells comprising such composites are particularly useful for the manufacture of objects, which in the course of their life cycle are subject to shocks or at risk of penetration,

### DETAILED DESCRIPTION OF THE INVENTION

### Legends to the figures

Figure 1: Compression molding of silk fibre composites
Figure 2: Set-up of falling weight impact test
Figure 3: Falling weight impact resistance of silk fibre composites as a function of the strain to failure of the matrix thermoplastic polymer

### Description

The present invention is based on the finding that selected silk fibre reinforced composite materials comprising a thermoplastic polymer matrix are relatively light, whilst having a high impact resistance. The silk fibre reinforced composite materials of the present invention allow for an optimal dissipation of the impact energy such that they have a penetration resistance higher than 20 J per mm of plate thickness, more preferably more than 30 J per mm, most preferably more than 40 J per mm, as measured according to the test method outlined in example 2 and figure 2. Such high impact resistance can be obtained by either or both an appropriate organisation of the silk fibres in the composite and an appropriate selection of a thermoplastic matrix polymer.

The present invention demonstrates that the organisation of the slik fibres can contribute significantly to the impact resistance by ensuring either or both a sufficient strength of the composite and a good deformability of the composite. It was found that an appropriate strength is obtained by organising the silk fibres in at least two directions within the composite whereby the tensile strength of the composite in each of the fibre directions is within the same range. Therefore, in a first object the present Invention provides a fibrous composite material comprising a thermoplastic polymer as matrix phase and silk fibres as reinforcement phase wherein the silk fibres are organised within said composite in at least two directions, and wherein
a) the tensile strength of said composite material varies less than 15% in between the fibre directions of the silk fibres comprised in the composite,
b) the twist of the fibres, if incorporated into yarns, is less than 2000 turns/meter,
c) said polymer matrix has a tensile modulus of less than 1000 MPa and a tensile strain to failure higher than 300%, and
d) silk fibres amount to at least 25% of the volume of the composite.

Preferably, the distribution of said silk fibres over said fibre directions is chosen such that the tensile strength of the composite material varies less than 15%, more preferably less than 10%, most preferably less than 7.5%, for instance 3% in between the fibre directions of the silk fibres comprised in the composite. In a preferred embodiment the orientation and the number of fibre directions within the composite are chosen such that the composite comprises a further, non-fibre direction, wherein said composite has a strain to failure higher than 25%, more preferably higher than 30%, most preferably higher than 35%, for instance more than 40%. Such high deformability in a given direction together with the balanced strength provided in the silk fibre directions allows for an efficient dissipation of energy upon impact. Preferably the silk fibres are organised in a plurality of fabrics or mats, which are stacked within said composite. The stacked silk fibre-containing fabrics or mats can either be woven, non-woven, braided or be a non-crimp fabric. A composite according to the first object of the present invention can either comprise a plurality of mats or fabrics of the same type or a combination of different types. Preferably the silk fibres used in the composites have a length exceeding 20 mm, more preferably exceeding 60 mm or are continuous silk fibres. In particular embodiments the silk fibres are spun into yarns. It is expected that composites based on discontinuous fibres will allow for easier forming into complex shapes.

In an embodiment of the first object of the present invention the composite comprises a plurality of weaves comprising silk fibres, more preferably 50% or more of the fibres comprised in the weaves are silk fibres, most preferably silk fibres are the only fibres comprised in said weaves. In a more preferred embodiment the weaves comprise the same fibres in the weft and warp directions and the fibre density in the weft and the warp of said weaves differs not more than 12%, more preferably less than 6%, most preferably the weaves are balanced weaves (balanced in weight), wherein the fibre densities in the weft and the warp are identical. The person skilled in the art will understand that to obtain a composite material wherein the tensile strength in each of the fibre directions is within the same range, it is preferred to stack such virtually balanced weaves, wherein fibre densities between the weft and the warp differ less than 12% or balanced weaves with the warp of the respective stacked weaves in the same direction or in a 90° angle. In another more preferred embodiment, the composite according to the present invention comprises a plurality of unbalanced weaves, wherein the fibre densities in the weft and the warp are significantly different. In a particular embodiment said unbalanced weaves comprise the same fibres in the weft and warp and the fibre densities in the weft and warp of said weaves differ more than 12%. When using such unbalanced weaves it is important that the respective weaves are stacked such that the overall fibre densities in the fibre directions of the composite vary less than 12%, preferably less than 6%, for instance less than 3%. Most preferably the respective unbalanced weaves are stacked such that the overall fibre densities in the fibre directions of the composite are identical. In a particular embodiment the composite material according to the present invention comprises a plurality of the same unbalanced weaves wherein about half of the weaves are stacked such that their weft direction is in a 90° angle with the weft direction of the other half of such weaves comprised in the composite. In another particular embodiment the unbalanced weaves comprise different fibres in the weft and warp, for instance a silk fibre in the weft and a cotton fibre in warp. When using such unbalanced weaves it is important that the respective weaves are stacked such that the overall silk fibre densities in the fibre directions of the composite vary less than 12%, preferably less than 6%, for instance less than 3%. Most preferably the respective unbalanced weaves are stacked such that the overall silk fibre densities in the fibre directions of the composite are identical.

It is preferred that the balanced or unbalanced weaves in the composites according to the present invention are stacked such that the composite comprises 2 fibre directions in an angle of 90°, corresponding to the weft and warp in the weaves. Such composites have the particular advantage that they have a high deformability in the directions, which are in a 45° angle with respect to each of the fibre directions. Preferably, this deformability measured as the strain to failure in the 45° directions is higher than 25 %, more preferably higher than 30%, most preferably higher than 35%, for instance higher than 40%. Furthermore, it was observed that the impact resistance of composite materials comprising weaves with a high degree of twist of the silk yarns was relatively lower (twist reduces yarn strength). Therefore it is preferred that the twist of the fibres, if incorporated into yarns, is less than 2000 turns/meter, preferably less than 1000 turns/meter, more preferably less than 500 turns/meter and most preferably less than 200 turns/meter.

It was furthermore observed that the impact resistance of (virtually) balanced silk fibre composite materials increases with the strain to failure of the (thermoplastic) polymer matrix material.

It was observed that fibrous composites with an impact resistance higher than 20 J per mm of plate thickness, more preferably more than 30 J per mm, for instance more than 40 J per mm were obtained when using a thermoplastic polymer as matrix phase and a silk fibre-containing knitted fabric as reinforcement phase. This high impact resistance (measured according to the test method outlined in example 2 and figure 2) was related to the high deformability of the knitted fabrics. Therefore, in a second object the present invention provides a fibrous composite material comprising a thermoplastic polymer as matrix phase and silk fibres as reinforcement phase wherein the silk fibres are organised in a plurality of stacked, knitted fabrics. In a preferred embodiment the knitted fabric comprises no other fibres than silk fibres. The silk fibres comprised in the knitted fabrics can either be spun into a yarn or be continuous fibres. In a more preferred embodiment the isolated knitted fabrics comprised in the composite have an average tensile strain to failure when averaged over all fabric directions of at least 80% or wherein the knitted fabric has a strain to failure of at least 60% in any direction of the fabric.

The thermoplastic polymer used as matrix in the composites according to the first and second object of the present invention is preferably characterised by a tensile modulus of less than 1000 MPa, more preferably less than 750 MPa, for instance less than 450 MPa and a tensile strain to failure higher than 300%, preferably more than 400%. A non-exhaustive list of examples of such thermoplastic polymers are polyolefins, including poly propylene, copolymers of polypropylene, polyethylene and copolymers of polyethylene. Other suitable thermoplastic polymers are aliphatic polyesters including poly butylene succinate (tradename e.g. Bionolle 1000 series) or a copolyamide (tradename e.g. Epurex).. But in principle any thermoplastic polymer could be chosen, including e.g. nylons, acrylonitrile butadiene styrene (ABS), polycarbonate (PC) and poly lactic acid (PLA), as long as sufficient action is taken to prevent oxidation of the silk. More preferably, said polymer is a thermoplastic elastomer, a copolymer of ethylene and vinyl acetate (tradename e.g. Escorene Ultra), a copolymer of ethylene and octene (tradename e.g. Exact), a poly butylene succinate co-adipate (tradename e.g. Bionolle 3000 series), polycaprolactone (tradename CAPA) or aromatic polyesters including polytetramethylene adipate terephtalate (tradename Ecoflex). More preferably, said matrix polymer is a thermoplastic elastomer. These elastomers cover a range of chemistries and compositions. A non-exhaustive list of examples includes physical blends of rubber phase in thermoplastic matrix, for example blends of EPDM rubber and polypropylene (tradename e.g. Santoprene), blends of poly ethylene vinyl acetate (EVA), polyethylene (PE) or polypropylene (PP) and EPDM (tradename e.g. Vistaflex), blends of PE or PP and butyl rubber (tradename e.g. Trefsin). Other suitable thermoplastic elastomers include blends of SEBS rubber and PP and thermoplastic polyurethanes. Thermoplastic polyurethanes include polyurethane esters and ethers (tradename e.g. Walopur) or a polycaprolactone copolyester (tradename e.g. Pearlthane).

High impact resistant fibrous composite material (as determined by the test method outlined in example 2 and figure 2) could also be obtained by combining silk fibres as reinforcement phase and a thermoplastic polymer as matrix phase wherein said polymer has a tensile modulus or stiffness less than 450 MPa and a tensile strain to failure higher than 400%. These polymers provide for exceptionally high impact resistance in a silk composite and furthermore provide a softer feel. Therefore, in a third object the present invention provides fibrous composite material comprising a thermoplastic polymer as matrix phase and silk fibres as reinforcement phase, wherein said thermoplastic polymer has a tensile modulus of less than 450 MPa and a tensile strain to failure higher than 400%. Preferably said polymer is a thermoplastic elastomer, a copolymer of ethylene and vinyl acetate (tradename e.g. Escorene Ultra), a copolymer of ethylene and octene (tradename e.g. Exact), an aliphatic polyester (biodegradable) including poly butylene succinate co-adipate (tradename e.g. Bionolle 3000 series), polycaprolactone (tradename CAPA) or an aromatic polyester including polytetramethylene adipate terephtalate (tradename Ecoflex). More preferably, said matrix polymer is a thermoplastic elastomer. These elastomers cover a range of chemistries and compositions. A non-exhaustive list of examples includes physical blends of rubber phase in thermoplastic matrix, for example blends of EPDM rubber and polypropylene (tradename e.g. Santoprene), blends of poly ethylene vinyl acetate (EVA), polyethylene (PE) or polypropylene (PP) and EPDM (tradename e.g. Vistaflex), blends of PE or PP and butyl rubber (tradename e.g. Trefsin). Other suitable thermoplastic elastomers include blends of SEBS rubber and PP and thermoplastic polyurethanes. Thermoplastic polyurethanes include polyurethane esters and ethers (tradename e.g. Walopur ), or a polycaprolactone copolyester (tradename e.g. Pearlthane).

In the fibrous composite materials according to the first, second and third object of the present invention the silk fibres amount to between 25 and 70 % of the volume of the composite, more preferably between 35 and 60 %, most preferably between 45 and 55%. Due to the high impact resistance of the fibrous composite material according to the present invention, panels or shells comprising such composites are particularly useful for the manufacture of objects, which in the course of their life cycle are subject to shocks or at risk of penetration. In a particular embodiment such panel or shell has a sandwich configuration, wherein the panel or shell comprises skins of the fibrous composite material and a core of unreinforced polymer material. Examples of such objects are recipients or containers, which are frequently transported or which are used in the proximity of pointed items, such as boxes, suitcases, briefcases, handbags, bottles, bath or kitchen accessories or watchcases. Other objects, which may benefit from the use of impact resistant panels are pieces of furniture such as tables, cabinets, office desks and closets amongst others. The panels and shells of the present invention are also of interest in the production of fixtures, such as fixtures of jewels or parts of closing systems of boxes, suitcases, briefcases, handbags, watchcases, jewel cases, bottles, or bath or kitchen accessories. The panels and shells of the present invention can further be used in the preparation of working pieces to be incorporated in industrial machinery or vehicles. The panels according to the present invention have the additional advantage that they can be shaped using thermoforming or vacuum forming processes, making them particularly suited to be used in the production of the above mentioned objects.

The present invention is further illustrated by way of the non-limiting examples given below.

### EXAMPLES

### Example 1: Production of the silk fibre composites

Silk fibre composites with different matrices were prepared by compression molding (in a press with hot and cold stage (Pinette)). Different layers of polymer film and silk weaves or knits were alternately stacked and heated under pressure for about 10 min. The pressure was chosen to be 20 bar effective pressure and the temperature was chosen, dependent on the polymer matrix material, about 20°C above the melting point of the polymer matrix. Table 1 gives a list of different processing temperatures used for the different silk fibre composites.

After 10 minutes the silk fibre composite plate was transferred to the cold stage where the plate was cooled down rapidly at the same pressure of 20 bar until the temperature reached the demoulding temperature, typically 20°C. Alternatively, the impregnated silk fibre composite was cooled under the same pressure at a slow cooling rate (5°C/min). This variation in production method had no influence on the final mechanical properties of the silk fibre composites.

Optionally, composite plates were subsequently formed into complex shapes by thermoforming or vacuum thermoforming.

### Example 2: Evaluation of silk fibre composites

Fibre volume fractions of silk fibre composites were calculated as the nominal thickness of the silk weave used divided by the thickness of the silk fibre composite plate. Plates were made with silk fibre volume fractions V_{f} of about 50%.

Impact properties were determined by a falling weight impact test. In such a test, plate type test specimens are punctured at their centre using a striker, perpendicularly to the test specimen surface and at nominally uniform velocity. The resulting force-deflection or force-time diagram is recorded electronically. The test specimen is clamped in position during the test. The cylindrical impactor used (diameter 16mm) had a hemispherical striker tip (radius 8mm). Drop height was 1200mm and the weight of the impactor was adapted in order to have penetration of the samples. This is following ISO standard 6603-2. Samples were 105mm by 105mm and were clamped by a support ring of 80mm diameter. The 4 screws were tightened with a momentum of 20Nm. The thicknesses of the plates were 1 mm. Results are reported as the impact energy needed for penetration, normalized to the thickness of the composite plate.

Tensile tests on silk fibre composites were done following the ASTM standard D3039-00.

### Example 3: Balanced silk fibre composite made of a balanced weave

Eight layers of twill weave and a number of layers of polymer matrix film were alternately stacked and compression molded to consolidate the plate as described in example 1. Each layer of twill weave was oriented in the same way. The silk twill weave, 78 g/m², comprised 56 yarns per centimeter in warp and 35 yarns per centimeter in weft direction. Warp yarns had linear density of 7.0 tex and weft yarns had a linear density of 10.9 tex. Both yarns were twisted with 100 twists per meter. The twill weave was balanced in weight in warp and weft. The number of layers of polymer film were dependent on the film thickness received from the supplier. The number of layers was chosen to produce 1 mm thick silk composite plates and a fibre volume fraction of 50%. The number of layers of polymer film for PBSa: 24, for PBS: 24, for PCL: 10, for PTMAT Ecoflex film: 8, for Walopur 4201 AU TPU film: 12, for PE-EVA: 6, for PP: 5, for Copolyamide H2: 12 and for Pearlthane D11 F60 TPU film: 12.

Tensile properties for PBSa silk twill weave composites, measured as in example 2, are shown in Table 2. As the twill weave is balanced in weight, the resulting silk fibre composites are balanced in strength and stiffness in the two main fibre directions, as the strength and stiffness were identical or nearly identical in the said fibre directions. The strength and elongation to failure in the 45° direction is very high, due to shear of the fabric.

Impact properties, determined as mentioned in example 2, of silk twill weave composites are given in table 3. Fracture appeared in both fibre directions. Table 3 allows to conclude that balanced silk fibre composites made by impregnating a balanced silk twill weave with different tough thermoplastic matrices, have high impact strength measured as absorbed impact energy (at penetration).

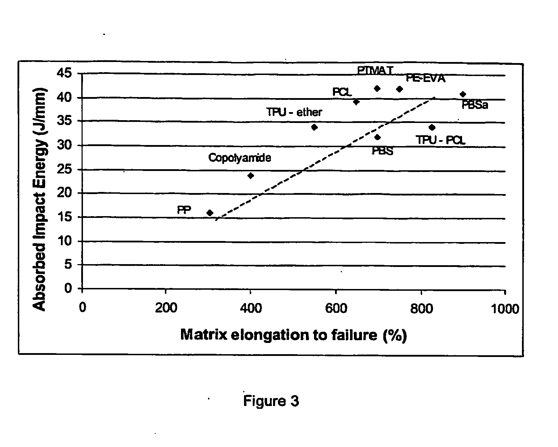

It is shown in Figure 3 that the impact strength of the balanced silk fibre composites is a clear function of the strain to failure of the thermoplastic polymer matrix material.

### Example 4: Unbalanced silk fibre composites made of an unbalanced silk twill (5/3) weave

Ten layers of silk fabric weave and 24 layers of PBSa polymer matrix film, with a thickness of 25µm, were alternately stacked and compression molded to consolidate the plate as described in example 1. The number of layers was chosen to produce 1 mm thick silk composite plates and a fibre volume fraction of 50%. Each layer of silk fabric was oriented in the same way. The silk fabric was a twill weave 5/3 with an areal density of 70g/m² comprising 100 yarns per centimeter in warp direction with linear density of 3.9 tex and 100 twists per meter, and 66 yarns per centimeter in weft direction with a linear density of 4.1 tex and 2800 twists per meter. The twill weave was not balanced in weight as the weight ratio warp/weft is 59/41.

Tensile properties for PBSa silk unbalanced twill (5/3) weave composites, measured as described in example 2, are shown in Table 4.

As the twill (5/3) weave is not balanced in weight this silk fibre composite is not balanced in strength and stiffness. Impact properties, determined as mentioned in example 2, of the silk twill (5/3) weave composite are given in table 5. Fracture appeared only in the weaker weft direction. It is clear that the unbalanced silk fibre composite produced by impregnation of an unbalanced silk twill (5/3) weave with a thermoplastic matrix had lower impact strength, as compared to the corresponding balanced silk fibre composite of example 3.

### Example 5: Balanced silk fibre composite made of an unbalanced silk twill (5/3) weave

Ten layers of silk fabric weave and 24 layers of PBSa polymer matrix film, with a thickness of 25µm, were alternately stacked and compression molded to consolidate the plate as described in example 1. The number of layers was chosen to produce 1 mm thick silk composite plates and a fibre volume fraction of 50%. The silk fabric was the same twill (5/3) weave as in example 4. The layers of silk fabric were alternately stacked so that the warp direction of one layer of the silk fabric was oriented under 90 degrees with respect to the next layer of silk fabric to create a balanced silk fibre composite plate out of an unbalanced silk weave.

Tensile properties of the balanced silk fibre composite, measured as in example 2, are shown in table 6 and illustrate that the silk composite was balanced in strength and stiffness.

Impact properties, determined as in example 2, of the balanced silk twill weave composite are given in table 7. Fracture appeared in both the weft and warp directions.

The present example demonstrates that a silk weave composite balanced in strength, which is prepared by appropriate stacking of unbalanced silk weaves, absorbs significantly more impact energy than the corresponding PBSa composite of example 4. The fact that the impact resistance is somewhat lower as compared to the PBSa composite material of example 3 is most likely due to the presence of the significant twist in the silk twill (5/3) weave, which weakens the fibre structure.

### Example 6: Unbalanced silk fibre composites made of an unbalanced silk twill (5/1/1/1) weave

Eight layers of silk fabric weave and 24 layers of PBSa polymer matrix film, with a thickness of 25µm, were alternately stacked and compression molded to consolidate the plate as described in example 1. The number of layers was chosen to produce 1 mm thick silk composite plates and a fibre volume fraction of 50%. Each layer of silk fabric was oriented in the same way. The silk fabric was a modified twill weave 5/1/1/1 with an areal density of 79g/m² comprising 8800 yarns per meter in warp direction with linear density of 5.9 tex and 100 twists per meter, and 4600 yarns per meter in weft direction with a linear density of 6.4 tex and 2600 twists per meter. The modified twill weave is not balanced in weight as the weight ratio warp/weft is 64/36.

Tensile properties for PBSa silk modified twill (5/1/1/1) weave composites, measured as in example 2, are shown in Table 8. As the modified twill (5/1/1/1) weave is not balanced in weight this silk fibre composite is not balanced in strength and stiffness. Impact properties, determined as mentioned in example 2, of silk modified twill (5/1/1/1) weave composites are given in table 9. Fracture appeared in only the weaker weft direction. As in example 4, the impact resistance is lower than for the corresponding PBSa composite in example 3.

### Example 7: Balanced silk fibre composites made of an unbalanced silk twill (5/1/1/1) weave

Ten layers of silk fabric weave and 24 layers of PBSa polymer matrix film, with a thickness of 25µm, were alternately stacked and compression molded to consolidate the plate as described in example 1. The number of layers was chosen to produce 1 mm thick silk composite plates and a fibre volume fraction of 50%. The silk fabric was the same modified twill (5/1/1/1) weave as in example 6. The layers of silk fabric were alternately stacked so that the warp direction of one layer of the silk fabric was, oriented under 90 degrees with respect to the next layer of silk fabric to create a balanced silk fibre composite plate out of an unbalanced silk weave. Tensile properties of the balanced silk fibre composite, measured as in example 2, are shown in table 10. The silk fibre composite is balanced in strength and stiffness. Impact properties, determined as mentioned in example 2, are given in table 11. Fracture appeared in both the weft and warp directions.

As in example 5, the present example demonstrates that a silk weave composite balanced in strength, which is prepared by appropriate stacking of unbalanced silk weaves, absorbs significantly more impact energy than the corresponding PBSa composite of example 6. The fact that the impact resistance is somewhat lower as compared to the PBSa composite material of example 3 is most likely due to the presence of the significant yarn twist in the silk twill (5/1/1/1) weave, which weakens the fibre structure.

### Example 8: Unbalanced silk fibre composites made of a slightly unbalanced weave

Four layers of silk fabric weave and 24 layers of PBSa polymer matrix film, with a thickness of 25µm, were alternately stacked and compression molded to consolidate the plate as described in example 1. The number of layers was chosen to produce 1 mm thick silk composite plates and a fibre volume fraction of 50%. Each layer of silk fabric was oriented in the same way. The silk fabric was a modified twill weave 6/2 with an areal density of 168 g/m² comprising two times 8800 yarns per meter in warp direction with linear density of 5.9 tex and 100 twists per meter, and 4600 yarns per meter in weft direction with a linear density of 6.4 tex and 2600 twists per meter. The modified twill weave is slightly unbalanced in weight as the weight ratio warp/weft is 53/47. This amounts to a fibre density which is 12.8% higher in the warp direction than in the weft direction.

As the modified twill (6/2) weave is not balanced in weight this silk fibre composite is not balanced in strength and stiffness. Impact properties, determined as mentioned in example 2, of silk modified twill (6/2) weave composites are given in table 12. It is apparent that employment of a slightly unbalanced weave already leads to loss in impact performance as compared to the PBSa composite material of example 3.

### Example 9: Silk fibre composite made of a knitted fabric

Seven layers of knitted silk fabric and 24 layers of PBSa polymer matrix film, with a thickness of 25µm, were alternately stacked and compression molded to consolidate the plate as described in example 1. The number of layers was chosen to produce 1 mm thick silk composite plates and a fibre volume fraction of 50%. Each layer of silk fabric was oriented in the same way. The silk fabric was a Jersey weft knitted fabric with an areal density of 105g/m² comprising 2 continuous yarns with linear density of 5.3 tex. The course length was 0.48mm, the wale length 0.55mm and the loop height 0.86 mm. Tensile properties of the knitted fabrics before impregnation with a thermoplastic matrix are shown in table 13. Only the elongation to failure is mentioned.

As knitted structures show high elongation to failure, they absorb a lot of impact energy, determined as mentioned in example 2. Table 14 shows the absorbed impact energy for this Jersey knitted PBSa silk fibre composite.

### TABLES

**Table 1: Processing temperatures for silk fibre composites with different polymer matrix materials.**

| **Polymer Matrix** | **Grade (Supplier)** | **Temperature** |
|---|---|---|
| Polybutylsuccinate (PBS) | Bionolle 1001 (Showa High Polymer) | 140°C |
| Polybutyl succinate-co-adipate (PBSa) | Bionolle 3001 (Showa High Polymer) | 120°C |
| Polycaprolactone (PCL) | CAPA FB 100 (Solvay) | 90°C |
| Polytetramethylene adipate terephtalate (PTMAT) | Ecoflex F BX 7011 (BASF) | 140°C |
| Thermoplastic polyurethane - ether (Ether TPU) | Walopur 4201 AU (Epurex Films) | 160°C |
| Thermoplastic polyurethane - polycaprolactone copolyester (PCL TPU) | Pearlthane D11F60 (Merquinsa) | 160°C |
| Polypropylene (PP) | (Lamespun) | 185°C |
| Polyethylene - Ethylene Vinyl Acetate (PE-EVA) | PE 11207 (Huntsman) | 140°C |
| Copolyamide | Platilon H2 (Epurex Films) | 135°C |

**Table 2: Tensile properties of PBSa silk twill weave composites**

| | **Strength (MPa)** | | | **Stiffness (GPa)** | | | **Elongation (%)** | | |
|---|---|---|---|---|---|---|---|---|---|
| Tensile test direction | Warp | 45° | Weft | Warp | 45° | Weft | Warp | 45° | Weft |
| PBSa Twill weave composites | 131 | 143 | 131 | 4.2 | 1.45 | 4.2 | 11.6 | 38.4 | 11.6 |

**Table 3: Absorbed impact energy of silk fibre composites with twill weave and different thermoplastic matrices.**

| **Polymer matrix** | **Impact energy of silk twill weave composites (J/mm thickness)** |
|---|---|
| Polybutylsuccinate (PBS) | 32 |
| Polybutyl succinate-co-adipate (PBSa) | 41 |
| Polycaprolactone (PCL) | 39 |
| Polytetramethylene adipate terephtalate (PTMAT) | 42 |
| Thermoplastic polyurethane ether (Ether TPU) | 34 |
| Thermoplastic polyurethane - polycaprolactone copolyester (PCL TPU) | 34 |
| Polypropylene (PP) | 16 |
| Polyethylene - Ethylene Vinyl Acetate (PE-EVA) | 42 |
| Copolyamide H2 | 24 |

**Table 4: Tensile properties of unbalanced PBSa silk twill (5/3) weave composites**

| | **Strength (MPa)** | | | **Stiffness (GPa)** | | | **Elongation (%)** | | |
|---|---|---|---|---|---|---|---|---|---|
| Tensile test direction | Warp | 45° | Weft | Warp | 45° | Weft | Warp | 45° | Weft |
| PBSa modified twill (5/3) weave composites | 165 | 115 | 82 | 4.7 | 1.3 | 2.6 | 17 | 42 | 17 |

**Table 5: Absorbed impact energy of unbalanced silk fibre composites with twill (5/3) weave and PBSa as thermoplastic matrix.**

| **Polymer matrix** | **Impact energy of silk fibre composite (J/mm thickness)** |
|---|---|
| Polybutyl succinate-co-adipate (PBSa) | 20 |

**Table 6: Tensile properties of balanced PBSa silk twill (5/3) weave composites**

| | **Strength (MPa)** | | | **Stiffness (GPa)** | | |
|---|---|---|---|---|---|---|
| Tensile test direction | Warp | 45° | Weft | Warp | 45° | Weft |
| PBSa modified twill (5/3) weave composites | 117 | | 117 | 2.5 | - | 5 |

**Table 7: Absorbed impact energy of balanced silk fibre composites with modified twill (5/3) weave and PBSa as thermoplastic matrix.**

| **Polymer matrix** | **Impact energy of silk fibre composite (J/mm thickness)** |
|---|---|
| Polybutyl succinate-co-adipate (PBSa) | 33 |

**Table 8: Tensile properties of unbalanced PBSa silk modified twill (5/1/1/1) weave composites**

| | **Strength (MPa)** | | | **Stiffness (GPa)** | | | **Elongation (%)** | | |
|---|---|---|---|---|---|---|---|---|---|
| Tensile test direction | Warp | 45° | Weft | Warp | 45° | Weft | Warp | 45° | Weft |
| PBSa modified twill (5/1/1/1) weave composites | 162 | 94 | 65 | 3.7 | 1.1 | 1.9 | 19 | 45 | 22 |

**Table 9: Absorbed impact energy of unbalanced silk fibre composites with modified twill (5/1/1/1) weave and PBSa as thermoplastic matrix.**

| **Polymer matrix** | **Impact energy of silk fibre composite (J/mm thickness)** |
|---|---|
| Polybutyl succinate-co-adipate (PBSa) | 20 |

**Table 10: Tensile properties of balanced PBSa silk modified twill (5/1/1/1) weave composites**

| | **Strength (MPa)** | | | **Stiffness (GPa)** | | |
|---|---|---|---|---|---|---|
| Tensile test direction | Warp | 45° | Weft | Warp | 45° | Weft |
| PBSa modified twill (5/1/1/1) weave composites | 115 | | 115 | 2.8 | | 2.8 |

**Table 11: Absorbed impact energy of balanced silk fibre composites with modified twill (5/1/1/1) weave and PBSa as thermoplastic matrix.**

| **Polymer matrix** | **Impact energy of silk fibre composite (J/mm thickness)** |
|---|---|
| Polybutyl succinate-co-adipate (PBSa) | 32 |

**Table 12: Absorbed impact energy of slightly unbalanced silk fibre composites with modified twill (6/2) weave and PBSa as thermoplastic matrix.**

| **Polymer matrix** | **Impact energy of silk fibre composite (J/mm thickness)** |
|---|---|
| Polybutyl succinate-co-adipate (PBSa) | 27 |

**Table 13: Tensile elongation of Jersey weft-knitted fabric before impregnation.**

| | **Strain to failure (%)** | | |
|---|---|---|---|
| Tensile test direction | Wale | 45° | Course |
| Jersey Knitted Fabric | 76 | 103 | 160 |

**Table 14: Absorbed impact energy of Jersey knitted silk fibre composites with PBSa as thermoplastic matrix.**

| **Polymer matrix** | **Impact energy of Jersey knitted silk fibre composites (J/mm thickness)** |
|---|---|
| Polybutyl succinate-co-adipate (PBSa) | 34 |

## Claims

1. A fibrous composite material comprising a thermoplastic polymer as matrix phase and silk fibres as reinforcement phase, wherein the silk fibres are organised within said composite in at least two directions, **characterised in that** a) the tensile strength of said composite material varies less than 15% in between the fibre directions of the silk fibres comprised in the composite,
b) the twist of the fibres, if incorporated into yarns, is less than 2000 turns/meter,
c) said polymer matrix has a tensile modulus of less than 1000 MPa and a tensile strain to failure higher than 300%, and
d) silk fibres amount to at least 25% of the volume of the composite.

2. Fibrous composite material according to claim 1 wherein said composite has a strain to failure higher than 25% in a direction other than any of the fibre directions of the silk fibres comprised in the composite.

3. Fibrous composite material according to claims 1 or 2 wherein said composite has a penetration resistance higher than 20 J per mm of plate thickness.

4. Fibrous composite material according to any of the claims 1 to 3 wherein the silk fibres are organised in a plurality of fabrics or mats stacked within said composite.

5. Fibrous composite material according to claim 4 wherein the mats or fabrics are weaves.

6. Fibrous composite material according to claim 5 wherein it comprises a plurality of weaves of which the fibre density in the weft and the warp directions differs at most 12%.

7. Fibrous composite material according to claim 6 wherein it comprises a plurality of balanced weaves.

8. Fibrous composite material according to claim 5 comprising a plurality of unbalanced weaves wherein the respective weaves are stacked such that the overall fibre density in the respective fibre directions comprised in the composite varies less than 12% in between the fibre directions.

9. Fibrous composite material according to any of the claims 5 to 8 comprising two silk fibre directions in an angle of 90° wherein said composite has a strain to failure higher than 25% in the directions in an approximate 45° angle with respect to each of the fibre directions.

10. Fibrous composite material according to any of the claims 1 to 9 wherein the twist of the fibres, If incorporated into yarns, is less 1000 turns/meter, preferably less than 500 turns/meter and more preferably less than 200 turns/meter.

11. Fibrous composite material according to any of the claims 1 to 10 wherein the silk fibres are continuous fibres.

12. Fibrous composite material according to any of the claims 1 to 10 wherein the silk fibres are spun into a yarn, wherein the fibre length is larger than 20 mm, more preferably larger than 60 mm.

13. Fibrous composite material according to any of the claims 1 to 10, wherein the length of the silk fibres is larger than 20 mm, more preferably larger than 60 mm.

14. Fibrous composite material according to any one of claims 1 to 13 wherein the thermoplastic polymer is selected out of the group consisting of polypropylene, copolymers of polypropylene, polyethylene, copolymers of polyethylene, polybutylene succinate or copolyamide.

15. Fibrous composite material according to any one of claims 1 to 13 wherein said thermoplastic polymers is a thermoplastic elastomer, a copolymer of ethylene and vinyl acetate, a copolymer of ethylene and octene, poly butylene succinate co-adipate, polycaprolactone or polytetramethylene adipate terephtalate.

16. Fibrous composite material according to claims 15 wherein said thermoplastic elastomer is selected out of the group consisting of blends of EPDM rubber and polypropylene, blends of poly ethylene vinyl acetate (EVA), polyethylene (PE) or polypropylene (PP) and EPDM, blends of PE or PP and butyl rubber, blends of SEBS rubber and PP and thermoplastic polyurethanes.

17. A panel or shell comprising a fibrous composite according to any of the claims 1 to 16.

18. A panel or shell according to claim 17 having a sandwich configuration, wherein said panel or shell comprises skins of the fibrous composite material according to any of the claims 1 to 16 and a core of unreinforced polymer material.

19. Panel or shell according to claims 17 or 18 wherein said panel or shell is thermoformed or vacuum formed.

20. A recipient or container comprising at least one panel or shell according to any of the claims 17 to 19.

21. The recipient or container according to claim 20 wherein said recipient is a box, suitcase, briefcase, handbag, watchcase, jewel case, bottle, a bath or kitchen accessory.

22. A piece of furniture comprising a panel or shell according to any of the claims 17 to 19.

23. A fixture comprising at least one panel or shell according to any of the claims 17 to 19.

24. The fixture according to claim 23 wherein the fixture is a fixture of a jewel, a part of the closing system of a box, suitcase, briefcase, handbag, watchcase, jewel case, bottle, a bath or kitchen accessory.

25. A working device comprising at least one panel or shell according to any of the claims 17 to 19.

## Patentansprüche

1. Faserverbundmaterial, das ein thermoplastisches Polymer als Matrixphase und Seidenfasern als Verstärkungsphase umfasst, wobei die Seidenfasern in dem Verbundmaterial in wenigstens zwei Richtungen geordnet sind, **dadurch gekennzeichnet, dass**
a) die Zugfestigkeit des Verbundmaterials zwischen den Faserrichtungen der Seidenfasern, die in dem Verbundmaterial enthalten sind, weniger als 15 % variiert;
b) die Drehung der Fasern, wenn sie in Garne eingearbeitet sind, weniger als 2000 Drehungen/m ist;
c) die Polymermatrix einen Zugmodul von weniger als 1000 MPa und eine Zug-Bruchdehnung von höher als 300 % hat, und
d) Seidenfasern wenigstens 25 % des Volumens des Verbundmaterials ausmachen.

2. Faserverbundmaterial nach Anspruch 1, wobei das Verbundmaterial eine Zug-Bruchdehnung hat, die in einer anderen Richtung als einer der Faserrichtungen der Seidenfasern, die in dem Verbundmaterial enthalten sind, höher als 25 % ist.

3. Faserverbundmaterial nach den Ansprüchen 1 oder 2, wobei das Verbundmaterial eine Penetrationsresistenz von höher als 20 J pro mm Plattendicke hat.

4. Faserverbundmaterial nach einem der Ansprüche 1 bis 3, wobei die Seidenfasern in einer Vielzahl von textilen Flächengeweben oder Matten, die in dem Verbundmaterial gestapelt sind, geordnet sind.

5. Faserverbundmaterial nach Anspruch 4, wobei die Matten oder textilen Flächengebilde Gewebe sind.

6. Faserverbundmaterial nach Anspruch 5, wobei es eine Vielzahl von Geweben umfasst, deren Faserdichte sich in Schuss- und Kettrichtung höchstens 12 % unterscheidet.

7. Faserverbundmaterial nach Anspruch 6, wobei es eine Vielzahl von ausgewogenen Geweben umfasst.

8. Faserverbundmaterial nach Anspruch 5, das eine Vielzahl von unausgewogenen Geweben umfasst, wobei die jeweiligen Gewebe so gestapelt sind, dass die Gesamtfaserdichte in den jeweiligen Faserrichtungen, die in dem Verbundmaterial enthalten sind, weniger als 12 % zwischen den Faserrichtungen variiert.

9. Faserverbundmaterial nach einem der Ansprüche 5 bis 8, das zwei Seidenfaserrichtungen in einem Winkel von 90° umfasst, wobei das Verbundmaterial eine Zug-Bruchdehnung von höher als 25 % in den Richtungen in einem ungefähr 45°-Winkel bezüglich jeder der Faserrichtungen hat.

10. Faserverbundmaterial nach einem der Ansprüche 1 bis 9, wobei die Drehung der Fasern, wenn sie in Garne eingearbeitet sind, weniger als 1000 Drehungen/m, vorzugsweise weniger als 500 Drehungen/m und bevorzugter weniger als 200 Drehungen/m ist.

11. Faserverbundmaterial nach einem der Ansprüche 1 bis 10, wobei die Seidenfasern Endlosfasern sind.

12. Faserverbundmaterial nach einem der Ansprüche 1 bis 10, wobei die Seidenfasern zu einem Garn gesponnen sind, wobei die Faserlänge größer als 20 mm, bevorzugter größer als 60 mm, ist.

13. Faserverbundmaterial nach einem der Ansprüche 1 bis 10, wobei die Länge der Seidenfasern größer als 20 mm, bevorzugter größer als 60 mm, ist.

14. Faserverbundmaterial nach einem der Ansprüchen 1 bis 13, wobei das thermoplastische Polymer ausgewählt wird aus der Gruppe, bestehend aus Polypropylen, Copolymeren von Polypropylen, Polyethylen, Copolymeren von Polyethylen, Polybutylensuccinat oder Copolyamid.

15. Faserverbundmaterial nach einem der Ansprüchen 1 bis 13, wobei das thermoplastische Polymer ein thermoplastisches Elastomer, ein Copolymer von Ethylen und Vinylacetat, ein Copolymer von Ethylen und Octen, Polybutylensuccinatcoadipat, Polycaprolacton oder Polytetramethylenadipatterephthalat ist.

16. Faserverbundmaterial nach Anspruch 15, wobei das thermoplastische Elastomer aus der Gruppe, bestehend aus Mischungen von EPDM-Kautschuk und Polypropylen, Mischungen von Polyethylenvinylacetat (EVA), Polyethylen (PE) oder Polypropylen (PP) und EPDM, Mischungen von PE oder PP und Butylkautschuk, Mischungen von SEBS-Kautschuk und PP und thermoplastischen Urethanen, ausgewählt wird.

17. Platte oder Schale, umfassend ein Faserverbundmaterial, nach einem der Ansprüche 1 bis 16.

18. Platte oder Schale nach Anspruch 17, die eine Sandwich-Konfiguration hat, wobei die Platte oder Schale eine Außenhaut aus dem Faserverbundmaterial nach einem der Ansprüche 1 bis 16 und einen Kern aus nicht verstärktem Polymermaterial umfasst.

19. Platte oder Schale nach Anspruch 17 oder 18, wobei die Platte oder Schale thermogeformt oder vakuumgeformt ist.

20. Aufnahmegefäß oder Behälter, umfassend wenigstens eine Platte oder Schale nach einem der Ansprüche 17 bis 19.

21. Aufnahmegefäß oder Behälter nach Anspruch 20, wobei das Aufnahmegefäß ein Kasten, ein Koffer, eine Aktentasche, eine Handtasche, ein Uhrengehäuse, ein Schmuckkästchen, eine Flasche, Bad- oder Küchenzubehör ist.

22. Möbelstück, umfassend eine Platte oder Schale nach einem der Ansprüche 17 bis 19.

23. Haltevorrichtung, umfassend wenigstens eine Platte oder Schale nach einem der Ansprüche 17 bis 19.

24. Haltevorrichtung nach Anspruch 23, wobei die Haltevorrichtung eine Haltevorrichtung eines Schmuckstücks, ein Teil des Schließsystems eines Kastens, eines Koffers, einer Aktentasche, einer Handtasche, eines Uhrengehäuses, eines Schmuckkästchens, einer Flasche, eines Bad- oder Küchenzubehörs ist.

25. Arbeitsvorrichtung, umfassend wenigstens eine Platte oder Schale nach einem der Ansprüche 17 bis 19.

## Revendications

1. Matériau composite fibreux comprenant un polymère thermoplastique en tant que phase de la matrice et des fibres de soie en tant que phase de renforcement, dans lequel les fibres de soie sont organisées au sein dudit composite suivant au moins deux directions, **caractérisé en ce que**
a) la résistante à la traction dudit matériau composite varie de moins de 15 % entre les directions des fibres de soie présentes dans le composite,
b) la torsion des fibres, si celles-ci sont incorporées à des fils, est inférieure à 2000 tours/mètre,
c) ladite matrice de polymère a un module de traction inférieure à 1000 MPa et une déformation sous traction à la rupture supérieure à 300 %, et
d) les fibres de soie représentent au moins 25 % du volume du composite.

2. Matériau composite fibreux selon la revendication 1, dans lequel ledit composite a une déformation à la rupture supérieure à 25 % dans une direction autre que l'une quelconque des directions des fibres de soie présentes dans le composite.

3. Matériau composite fibreux selon la revendication 1 ou 2, dans lequel ledit composite a une résistance à la pénétration supérieure à 20 J par mm d'épaisseur de la plaque.

4. Matériau composite fibreux selon l'une quelconque des revendications 1 à 3, dans lequel les fibres de soie sont organisées en une pluralité de tissus ou de mats empilés dans ledit composite.

5. Matériau composite fibreux selon la revendication 4, dans lequel les mats ou les tissus sont des armatures.

6. Matériau composite fibreux selon la revendication 5, **caractérisé en ce qu'**il comprend une pluralité d'armatures dont la densité de fibres dans la trame et les directions de chaîne diffèrent d'au plus 12 %.

7. Matériau composite fibreux selon la revendication 6, **caractérisé en ce qu'**il comprend une pluralité d'armatures équilibrées.

8. Matériau composite fibreux selon la revendication 6, comprenant une pluralité d'armatures non équilibrées, les armatures respectives étant empilées de façon que la densité globale des fibres dans les directions des fibres respectives présentes dans le composite varie de moins de 12 % entre les directions des fibres.

9. Matériau composite fibreux selon l'une quelconque des revendications 5 à 8, comprenant deux directions de fibres de soie formant un angle de 90°, ledit composite ayant une déformation à la rupture supérieure à 25 % dans des directions formant un angle d'environ 45° par rapport à chacune des directions des fibres.

10. Matériau composite fibreux selon l'une quelconque des revendications 1 à 9, dans lequel la torsion des fibres, si celles-ci sont incorporées à des fils, est inférieure à 1000 tours/mètre, et de préférence inférieure à 500 tours/mètre et mieux encore, inférieure à 200 tours/mètre.

11. Matériau composite fibreux selon l'une quelconque des revendications 1 à 10, dans lequel les fibres de soie sont des fibres continues.

12. Matériau composite fibreux selon l'une quelconque des revendications 1 à 10, dans lequel les fibres de soie sont filées en un fil, la longueur de fibre étant supérieure à 20 mm et mieux encore, supérieure à 60 mm.

13. Matériau composite fibreux selon l'une quelconque des revendications 1 à 10, dans lequel la longueur des fibres de soie est supérieure à 20 mm et mieux encore, supérieure à 60 mm.

14. Matériau composite fibreux selon l'une quelconque des revendications 1 à 13, dans lequel le polymère thermoplastique est sélectionné dans le groupe constitué du polypropylène, de copolymères de polypropylène, du polyéthylène, de copolymères de polyéthylène, du succinate de polybutylène ou d'un copolyamide.

15. Matériau composite fibreux selon l'une quelconque des revendications 1 à 13, dans lequel ledit polymère thermoplastique est un élastomère thermoplastique, un copolymère d'éthylène et d'acétate de vinyle, un copolymère d'éthylène et d'octène, un succinate coadipate de polybutylène, une polycaprolactone ou un téréphtalate adipate de polytétraméthylène.

16. Matériau composite fibreux selon la revendication 15, dans lequel ledit élastomère thermoplastique est sélectionné dans le groupe constitué de mélanges de caoutchouc EPDM et de polypropylène, de mélanges de poly(éthylène-acétate de vinyle) (EVA), de polyéthylène (PE) ou de polypropylène (PP) et d'EPDM, de mélanges de PE ou de PP et de caoutchouc butyle, de mélanges de caoutchouc SEBS et de PP et de polyuréthannes thermoplastiques.

17. Panneau ou enveloppe comprenant un composite fibreux selon l'une quelconque des revendications 1 à 16.

18. Panneau ou enveloppe selon la revendication 17, ayant une configuration de sandwich, dans lequel ledit panneau ou ladite enveloppe comprend des peaux du matériau composite fibreux de l'une quelconque des revendications 1 à 16 et une âme de matériau polymère non renforcé.

19. Panneau ou enveloppe selon la revendication 17 ou 18, dans lequel ledit panneau ou ladite enveloppe est thermoformé ou formé sous vide.

20. Récipient ou conteneur comprenant au moins un panneau ou une enveloppe selon l'une quelconque des revendications 17 à 19.

21. Récipient ou conteneur selon la revendication 20, dans lequel ledit récipient est une boîte, une valise, un porte-documents, un sac à main, un étui à lunettes, un étui à bijoux, un flacon, un accessoire de bain ou de cuisine.

22. Meuble comprenant un panneau ou une enveloppe selon l'une quelconque des revendications 17 à 19.

23. Montage comprenant au moins un panneau ou une enveloppe selon l'une quelconque des revendications 17 à 19.

24. Montage selon la revendication 23, le montage étant un montage de bijou, une pièce du système de fermeture d'une boîte, d'une valise, d'un porte-documents, d'un sac à main, d'un étui à lunettes, d'un étui à bijoux, d'un flacon, d'un accessoire de bain ou de cuisine.

25. Dispositif de travail comprenant au moins un panneau ou une enveloppe selon l'une quelconque des revendications 17 à 19.
